# DEMANDE DE BREVET EUROPEEN

(11) **EP 0 794 415 A1**
(43) Date de publication de la demande: **10.09.1997**
(21) Numéro de dépôt: 97200633.2
(22) Date de dépôt: 04.03.1997
(51) Int. Cl.: G01J 5/24

(54) **Dispositif de mesure de température sans contact**

(30) Priorité: 06.03.1996 FR 9602814
(71) Demandeur: Philips Electronics N.V., 5621 BA Eindhoven (NL)
(72) Inventeur: Gourrier, Serge, 75008 Paris (FR); Hazan, Jean-Pierre, 75008 Paris (FR)
(74) Mandataire: Chaffraix, Jean

(57) **Abrégé**

Dispositif (5) de mesure de température sans contact comportant un bolomètre muni de thermistances (20₁, 20₂, 20₃, 20₄) organisées en pont de Wheatstone. Certaines thermistances sont masquées (20₂, 20₄) et d'autres sont non masquées (20₁, 20₃) pour leur permettre respectivement de ne pas recevoir et de recevoir un rayonnement thermique (25) en provenance d'un objet (OBJ). Le rayonnement thermique va chauffer les thermistances non masquées et provoquer un déséquilibre (v) du pont. On annule ce déséquilibre en chauffant toutes les thermistances par un chauffage additionnel (18, 26). A l'équilibre, la température de l'objet est égale à celle des thermistances.

Le chauffage additionnel est fourni, préférentiellement, en faisant varier la puissance électrique alimentant le pont. Des moyens de calcul (14) permettent de déterminer la température de l'objet à partir des valeurs courant/tension relatives aux thermistances.

Référence : figure 1.

Applications: Appareillages munis d'un dispositif de mesure de température, four, grille-pain, appareil de chauffage.

## Description

L'invention concerne un dispositif de mesure de température sans contact comportant un bolomètre structuré en pont de Wheatstone, des moyens d'alimentation connectés à une diagonale du pont, des moyens de détection pour mesurer une tension de déséquilibre dans une autre diagonale du pont, le bolomètre comportant des composants sensibles à des variations de température, une partie des composants étant masquée et une autre partie des composants étant non masquée pour, respectivement, ne pas permettre et permettre des modifications de températures des composants par un échange thermique par rayonnement entre eux et un objet placé en regard du bolomètre, et des moyens de chauffage pour fournir un chauffage additionnel aux composants.

Le dispositif peut être utilisé pour mesurer sans contact des températures dans de multiples applications.

Un bolomètre est un détecteur thermique qui absorbe des radiations pour les transformer en chaleur, ce qui provoque une élévation de température du bolomètre. Une propriété du bolomètre, généralement sa résistance électrique, varie avec la température ce qui permet de mesurer l'intensité du flux de radiations ayant frappé le bolomètre. De ce fait, lorsque les radiations proviennent d'un corps chaud placé devant le bolomètre, il est possible de déterminer la température du corps chaud.

Une configuration courante d'un bolomètre est celle d'un pont de Wheatstone comportant une thermistance, donc un composant sensible à la température, destinée à recevoir les radiations, et trois autres composants, ces derniers étant masqués pour ne pas recevoir les radiations. Les trois autres composants sont utilisés comme références pour compenser les variations de température subies par l'élément sensible. Généralement le pont est équilibré en l'absence de radiations, les deux branches du pont alimentées en parallèle ayant des résistances égales. La sensibilité optimale est obtenue lorsque les composants formant le pont ont des résistances électriques égales ou très proches les unes des autres.

Un dispositif de mesure de température basé sur ce principe est décrit dans le document DE 26 07 806. Il comporte un bolomètre ayant une seule thermistance et 3 résistances fixes insensibles aux variations de température. Le dispositif dispose d'une grande sensibilité de détection, associée à une faible consommation d'énergie et ne nécessite pas de moyens thermostatiques pour aligner le bolomètre en l'absence de radiations. A la mise en route, pour effectuer un alignement automatique du pont, selon ce document, on provoque un échauffement de la thermistance en faisant varier le courant traversant le pont. A partir de mesures de la tension de déséquilibre du pont, des moyens à contre-réaction agissent pour modifier le courant du pont de manière à équilibrer donc à aligner le bolomètre et à le rendre prêt à l'usage. Ensuite, le flux de radiations est cadencé pour générer un signal de déséquilibre à la même cadence.

Pour l'exploitation du signal de mesure, des moyens de correction permettent de corriger le signal de déséquilibre en tenant compte du courant traversant le pont provoquant une élévation de température de la thermistance due à l'alignement. Mais un tel dispositif de mesure de température délivre des mesures qui restent encore imprécises car il ne prend pas en compte les facteurs d'émissivité qui différencient le bolomètre du corps produisant les radiations.

Le but de l'invention est d'accroître la précision des mesures de température réalisées à l'aide d'un bolomètre.

Ce but est atteint avec un dispositif dans lequel :
- le bolomètre comporte deux composants masqués et deux composants non masqués respectivement opposés diagonalement dans le pont,
- le chauffage additionnel étant apte à faire varier les températures des composants jusqu'à provoquer une égalité de température entre les composants non masqués et l'objet, l'égalité de température étant révélée en détectant, par les moyens de détection, une annulation de la tension de déséquilibre,
- le dispositif comprenant des moyens de mesure de température pour déterminer la température commune aux composants non masqués et à l'objet conduisant à l'annulation de la tension de déséquilibre.

Ainsi lorsque les composants non masqués sont soumis à l'action des radiations et après que l'équilibre thermique entre les flux échangés a été atteint, la température des composants masqués se trouve être égale à la température de l'objet lorsque la tension de déséquilibre est compensée par l'action du chauffage additionnel, et ceci indépendamment des émissivités de l'objet et des composants masqués. Préférentiellement, le chauffage additionnel est fourni en faisant varier la puissance électrique dissipée par les moyens d'alimentation du pont. Il n'y a donc pas besoin d'effectuer un calibrage pour adapter le bolomètre aux caractéristiques d'émissivité de l'objet à examiner. Un tel calibrage est d'ailleurs source d'imprécision.

Préférentiellement on utilise un type identique de thermistance pour les composants masqués et les composants non masqués.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma électrique d'un dispositif de mesure de température comportant un bolomètre structuré en pont.

Figures 2A, 2B : une vue de dessus (2A), montrant un exemple de bolomètre avec 2 composants masqués et 2 composants non masqués et une vue en coupe (2B).

Figure 3 : des courbes montrant les variations de température des thermistances non masquées et les variations de la tension de déséquilibre au cours de la procédure d'équilibrage des températures.

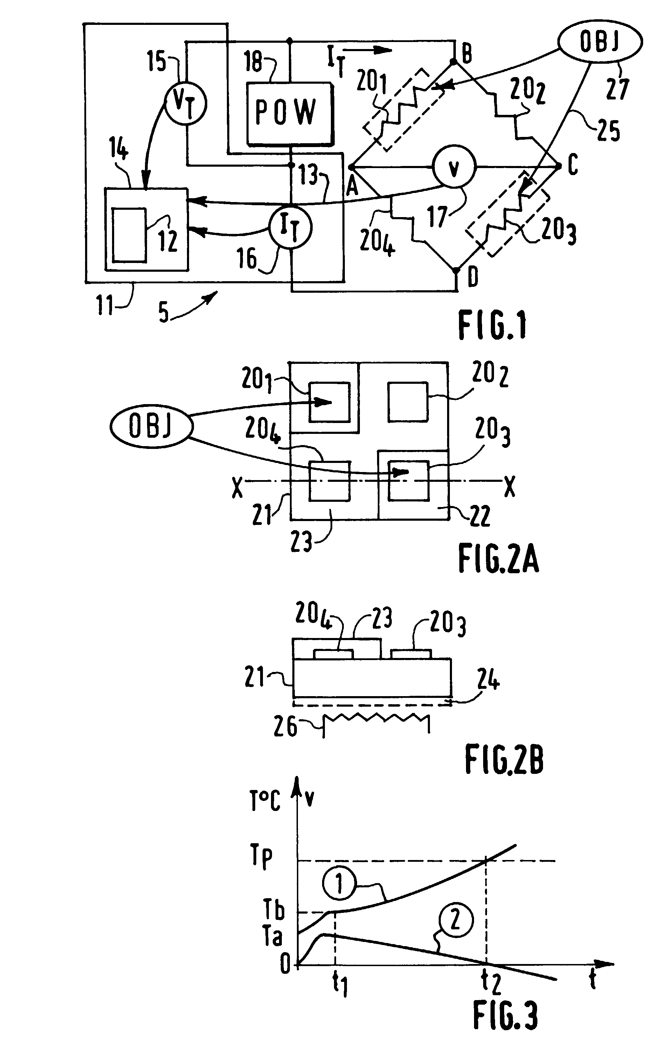

La figure 1 représente un schéma électrique d'un dispositif 5 de mesure de température comprenant :
- un bolomètre structuré en pont de Wheatstone formé par quatre thermistances 20₁, 20₂, 20₃, 20₄,
- des moyens 18 POW pour alimenter le pont,
- des moyens de détection 17 pour mesurer une tension de déséquilibre v du pont. Les moyens d'alimentation 18 sont connectés à une diagonale BD du pont et les moyens de détection 17 sont connectés à une autre diagonale AC du pont.

Dans un mode préférentiel de réalisation, les quatre thermistances 20₁, 20₂, 20₃, 20₄ sont identiques et réalisées au cours des mêmes opérations de fabrication. Les thermistances situées dans des branches opposées du pont, par exemple les thermistances 20₂ et 20₄, sont masquées pour ne pas subir l'influence de radiations 25 émises par un objet 27. Les thermistances 20₁ et 20₃ situées dans les autres branches ne sont pas masquées et sont absorbantes ou revêtues d'une couche absorbante pour recevoir et absorber les radiations.

Lorsque le bolomètre présente une température uniforme, le pont de Wheatstone est équilibré et par conséquent la tension de déséquilibre v du pont est nulle. Dans la pratique en l'absence de l'objet, on utilise un courant d'alimentation suffisamment faible pour ne pas chauffer les thermistances. Lorsque le bolomètre est soumis à l'action des radiations 25, les thermistances non masquées vont absorber les radiations et leur température va augmenter. Une tension de déséquilibre v non nulle apparaît. A ce stade, pour rééquilibrer le pont, selon l'invention, on fournit un apport de chaleur au bolomètre. Par exemple, on modifie le courant d'alimentation du pont de manière à dissiper une puissance électrique dans les quatre thermistances. Le pont sera à nouveau rééquilibré lorsque les thermistances non masquées 20₁, 20₃ rayonneront autant d'énergie qu'elles en recevront par les radiations 25. A cet instant les quatre thermistances ainsi que l'objet présenteront une température identique. Le bilan thermique échangé entre l'objet et les thermistances non exposées étant par ailleurs nul, les émissivités de l'objet et des thermistances seront inopérantes sur cet équilibre. Ceci s'appliquant dans la mesure où les thermistances non masquées ne reçoivent essentiellement que le rayonnement de l'objet ou ne reçoivent pas de rayonnement perturbateur du milieu ambiant. De cette manière, il est donc possible de déterminer la température de l'objet à partir de la température des thermistances en écartant l'influence des paramètres précités, ce qui n'était pas possible auparavant.

Le chauffage additionnel des thermistances peut-être obtenu par chauffage direct par un accroissement du courant électrique d'alimentation dans les thermistances ou encore par chauffage par conduction, grâce à un élément 26 de chauffage annexe isolé électriquement des thermistances (figure 2B).

Le dispositif comporte des moyens 11 de mesure de température des thermistances muni de moyens 16 pour mesurer la valeur du courant d'alimentation et de moyens 15 pour mesurer la valeur de la tension d'alimentation. Lorsque la tension de déséquilibre s'annule, ces valeurs sont respectivement I_{T} et V_{T}. Pour prélever les valeurs I_{T} et V_{T}, les moyens de détection 17 délivrent un signal de commande 13 qui actionne des moyens de calcul 14. Ceux-ci déterminent un rapport R = *V*_{*T*}*/I*_{*T*} qui constitue la valeur de la résistance électrique commune à toutes les thermistances dans le cas d'un pont formé de composants identiques. Les variations de résistance électrique de la thermistance avec la température étant connues par un étalonnage préalable, il est ainsi possible de constituer puis de consulter une table de correspondance 12 pour connaître la température de la thermistance et donc celle de l'objet. La table de correspondance 12 peut être contenue dans les moyens de calcul 14.

Un exemple d'une structure physique du bolomètre est représenté sur les figures 2A et 2B. La figure 2B est une vue en coupe effectuée selon la direction XX. Sur un substrat 21 on a déposé quatre thermistances formées par exemple par quatre plots déposés par évaporation en couche mince d'un matériau ayant un coefficient de température adapté pour constituer une thermistance. Sur l'ensemble on dépose ensuite une couche 23 d'un matériau réfléchissant en ménageant dans cette couche des ouvertures 22 pour permettre aux thermistances 20₁, 20₃ de recevoir les radiations. En réalisant globalement toutes les thermistances au cours d'un même processus de fabrication, on est ainsi assuré qu'elles disposent de caractéristiques identiques. Le pont est ainsi équilibré par construction en l'absence de tout rayonnement. Les éléments non masqués doivent être suffisamment proches des éléments masqués correspondants pour éviter des dissymétries thermiques qui ne seraient pas dues à l'absorption du rayonnement utile mais qui seraient dues par exemple à une non-uniformité de l'ambiance thermique. Cependant les éléments masqués doivent bien sûr être suffisamment isolés thermiquement des éléments non masqués pour que l'échauffement de ces derniers par le rayonnement utile ne se propage pas aux éléments masqués. Par exemple, pour ne pas créer de dissymétries thermiques dues à l'ambiance thermique, on peut placer le substrat 21 sur un support 24 assez bon conducteur de la chaleur.

La figure 3 montre une courbe 1 donnant les variations de la température d'une thermistance non masquée et une courbe 2 donnant les variations de la tension de déséquilibre v au cours du temps t. En l'absence de rayonnement, le pont est équilibré et la tension de déséquilibre est nulle, v = o. Toutes les thermistances sont à la même température Ta. A l'instant t = o, les thermistances non masquées sont soumises à l'action du rayonnement 25 provenant de l'objet 27 ayant une température Tₚ. De ce fait, la température des thermistances non masquées s'élève jusqu'à la température T_{b} (temps t₁). Ceci provoque l'apparition d'une tension de déséquilibre du pont. Le chauffage additionnel est alors mis en route soit en enclenchant l'élément de chauffage annexe soit en adaptant la puissance électrique dissipée dans les thermistances par les moyens d'alimentation 18. Il peut s'agir de variations, combinées ou non, imposées au courant ou à la tension d'alimentation.

Les thermistances vont ainsi s'échauffer, et en particulier celles recevant les radiations vont s'échauffer selon par exemple la courbe 1. Les écarts de température entre les thermistances se réduisant, la tension de déséquilibre va décroître et atteindre (temps t₂) une valeur nulle lorsque la température des thermistances sera égale à celle de l'objet, les flux thermiques échangés entre l'objet et les thermistances non masquées s'équilibrant. Au temps t₂, les valeurs de courant I_{T} et de tension V_{T} d'alimentation sont prélevées pour être traitées comme cela a été indiqué précédemment.

Si le processus de fabrication des thermistances donne naissance à des écarts entre les valeurs des résistances électriques, ceci se traduit par l'apparition d'une tension résiduelle de déséquilibre lorsque le bolomètre est à une température uniforme. Le principe de rééquilibrage du pont reste semblable à ce qui a été décrit précédemment, avec la restriction que le rééquilibrage par le chauffage additionnel est obtenu quand la tension de déséquilibre atteint à nouveau la tension résiduelle.

Il est possible d'utiliser la tension de déséquilibre pour asservir la puissance électrique dissipée dans les thermistances de manière à diminuer le temps mis par le bolomètre pour atteindre l'équilibre thermique décrit précédemment.

Inversement il est possible de déterminer l'instant où la température d'un objet atteint une température prédéterminée. Pour cela, on impose des valeurs de tension V et de courant I d'alimentation ce qui fixe la valeur du rapport R = V/I. Lorsque la tension de déséquilibre passe par une valeur nulle, l'équilibre thermique est atteint entre l'objet et les thermistances non masquées.

## Revendications

1. Dispositif (5) de mesure de température sans contact comportant un bolomètre structuré en pont de Wheatstone, des moyens d'alimentation (18) connectés à une diagonale du pont, des moyens de détection (17) pour mesurer une tension de déséquilibre (v) dans une autre diagonale du pont, le bolomètre comportant des composants sensibles (20₁, 20₂, 20₃, 20₄) à des variations de température, une partie des composants (20₂, 20₄) étant masquée et une autre partie des composants (20₁, 20₃) étant non masquée pour, respectivement, ne pas permettre et permettre des modifications de températures des composants par un échange thermique par rayonnement (25) entre eux et un objet (27) placé en regard du bolomètre, et des moyens de chauffage (26, 18) pour fournir un chauffage additionnel aux composants, caractérisé en ce que:
- le bolomètre comporte deux composants masqués (20₂, 20₄) et deux composants non masqués (20₁, 20₃) respectivement opposés diagonalement dans le pont,
- le chauffage additionnel étant apte à faire varier les températures des composants (20₁, 20₂, 20₃, 20₄) jusqu'à provoquer une égalité de température entre les composants non masqués (20₁, 20₃) et l'objet, l'égalité de température étant révélée en détectant, par les moyens de détection (17), une annulation de la tension de déséquilibre (v),
- le dispositif (5) comprenant des moyens (11) de mesure de température pour déterminer la température commune aux composants non masqués et à l'objet conduisant à l'annulation de la tension de déséquilibre.

2. Dispositif selon la revendication 1 caractérisé en ce que le chauffage additionnel est fourni en faisant varier la puissance électrique dissipée par les moyens (18) d'alimentation du pont.

3. Dispositif selon la revendication 1 caractérisé en ce que le chauffage additionnel est fourni par des moyens (26) de chauffage additionnel.

4. Dispositif selon une des revendications 1 à 3 caractérisé en ce que les composants masqués et les composants non masqués présentent une résistance électrique identique lorsque leur température est identique.

5. Dispositif selon la revendication 4 caractérisé en ce que le bolomètre comporte quatre thermistances identiques, les moyens (11) de mesure de température comportant des moyens pour mesurer une valeur de courant d'alimentation (16) et une valeur de tension d'alimentation (15) qui provoquent l'annulation de la tension de déséquilibre (v) induite par une présence de l'objet (27) face au bolomètre, les moyens de mesure de température calculant (12, 14) un rapport entre ladite valeur de tension et ladite valeur de courant et délivrant, à partir de ce rapport, une température de l'objet.
